# EUROPEAN PATENT SPECIFICATION

(11) **EP 4 118 529 B1**
(45) Date of publication and mention of the grant of the patent: **01.07.2026**
(21) Application number: 20711133.7
(22) Date of filing: 11.03.2020
(51) Int. Cl.: G06F 8/65, B60L 3/12

(54) **DEVICE AND METHOD FOR MANAGING THE UPDATE OF A SOFTWARE ELEMENT OPERATING A MODULE OF A VEHICLE**
VORRICHTUNG UND VERFAHREN ZUR VERWALTUNG DER AKTUALISIERUNG EINES SOFTWAREELEMENTS ZUM BETRIEB EINES MODULS EINES FAHRZEUGS
DISPOSITIF ET PROCÉDÉ DE GESTION DE LA MISE À JOUR D'UN ÉLÉMENT LOGICIEL EXPLOITANT LE MODULE D'UN VÉHICULE

(43) Date of publication of application: 18.01.2023
(73) Proprietor: TOYOTA JIDOSHA KABUSHIKI KAISHA, Toyota-Shi, Aichi-Ken 471-8571 (JP)
(72) Inventor: ANDO, Yasushi, 1140 BRUSSELS (BE); RATEAU, Aymeric, 1140 BRUSSELS (BE)
(74) Representative: Cabinet Beau de Loménie
(86) International application number: PCT/EP2020/056568
(87) International publication number: WO 2021/180320

(56) References cited:
- EP-A2- 1 705 565
- DE-A1- 102015 103 995
- US-A1- 2018 032 324

## Description

### Field of the disclosure

The present disclosure relates to the field of software used in vehicles. More precisely, the invention concerns the update of software used in a vehicle, for example using Over The Air (OTA) methods.

### Description of Related Art

OTA updating methods allow updating software used in modules of a vehicle in a wireless manner.

Several difficulties can arise when updating software using OTA, which can lead to an update failure.

From the prior art, the following documents are known:
Document US20170242678 proposes to detect failures during software updates. In case of a failure, the new software is deleted from a primary memory and the existing software is reloaded from a secondary memory. This solution is not satisfactory as it requires the use of two memory elements.

Document US20170315797 proposes the use of a server to determine the software updates based on geographical information, and therefore only relies on a GPS module.

Document US20170242679 discloses a processor configured to receive a list of available updates compatible with the installed vehicle software versions in response to the transmission. This solution does not prevent update failures. Document EP1705565A2 discloses a technique of rewriting data of programs of control apparatuses efficiently and safely in a system in which the plurality of control apparatuses are coupled via a network within a vehicle.

The solutions of the prior art can lead to update failures or may be too complex to implement.

### Summary

The present disclosure overcomes one or more deficiencies of the prior art by proposing a method according to claim 1.

According to a general characteristic, the at least one secondary module is a temperature acquisition module or a module having at least one functionality in common with the primary module.

It has been observed by the inventors that a temperature associated with the vehicle can provide a good indication of whether an update can succeed or not. Typically, the temperature is a good indicator of whether the battery of the vehicle will be emptied quickly or not. If it is the case, the update should be prevented (not downloading, not updating, or not executing).

Additionally, it has been observed by the inventors that when the vehicle is equipped with two modules having one functionality in common, the risk associated with updating only one of the modules is low, and this can therefore be taken into account to decide whether an update should be performed or not.

According to a particular embodiment not covered by the claims, a secondary module is a temperature acquisition module and the verifying step comprises verifying if an acquired temperature is above and/or below at least one given temperature threshold.

According to a particular embodiment not covered by the claims, the verifying step comprises verifying another condition relating to a battery of the vehicle including verifying if a state of charge of the battery is above a given charging threshold.

According to a particular embodiment not covered by the claims, the verifying step comprises:
verifying if the acquired temperature is above -15°C,
verifying if the acquired temperature is below 30°C, and
verifying if the state of charge is above 25%.

According to a particular embodiment, a secondary module is a module having at least one functionality in common with the primary module and the verifying step comprises verifying an update status of the secondary module.

According to a particular embodiment, verifying an update status of the secondary module includes verifying that a software element configured to be used to operate the secondary module is not to be updated quasi simultaneously with the software element associated with the primary module.

According to a particular embodiment, the verifying step further comprises verifying if at least one given location is at a distance which is below a given distance threshold from the vehicle.

According to a particular embodiment, the verifying step further comprises verifying that an update approval has been received through a human machine interface of the vehicle.

The invention further proposes a device according to claim 7.

This device may be configured to implement any one of the embodiments of the method as defined above.

The invention also proposes a vehicle comprising the device as defined above.

In one particular embodiment, the steps of the method are determined by computer program instructions.

Consequently, the invention is also directed to a computer program according to claim 9.

This program can use any programming language and take the form of source code, object code or a code intermediate between source code and object code, such as a partially compiled form, or any other desirable form.

The invention is also directed to a computer-readable information medium according to claim 10.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

### Brief description of the drawings

Further features and advantages of the present disclosure will become apparent from the following description of certain embodiments thereof, given by way of illustration only, not limitation, with reference to the accompanying drawings in which:
Figure 1 is a schematic representation of a vehicle equipped with a device according to an example,
Figure 2 shows the steps of a method according to a first example, and
Figure 3 shows the steps of a method according to a second example.

### Description of embodiments

We will now describe a method for managing the update of a software element which will be used to operate a module of a vehicle, for example an automobile.

By way of example, this module may be an electronic module (such as an ECU), an electric module (a battery, an electric motor, etc.), or any module which is operated by using software.

The complete update process of a software element comprises several steps:
- Downloading an update package, for example using an Over-The-Air method through a wireless communication network,
- Implementing the update, for example by modifying a portion of the code of the software element with code from the update package,
- Executing the software element which has been modified in the previous step.

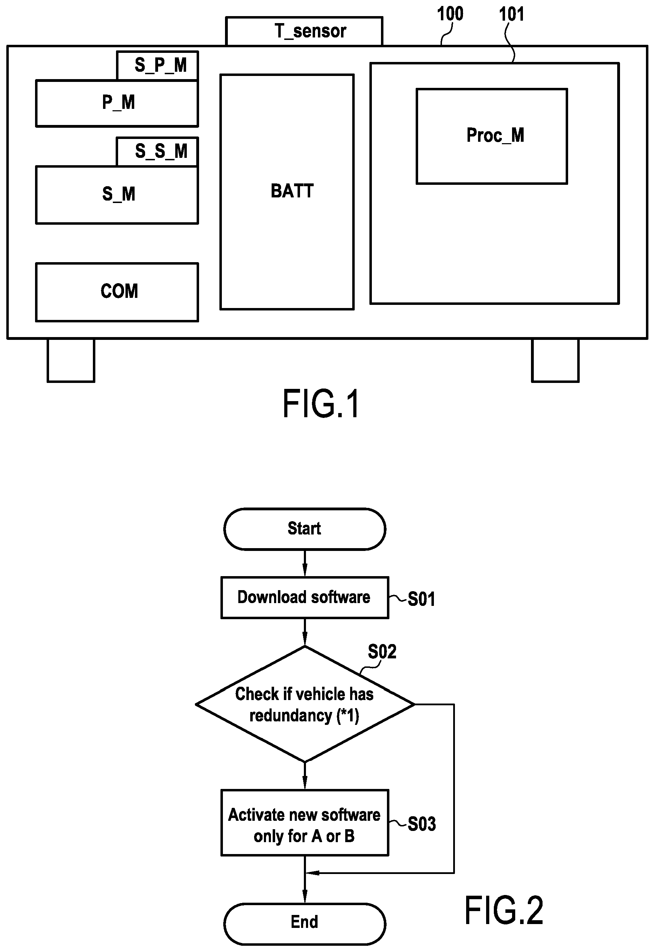

On figure 1, a vehicle 100 is represented equipped with an electronic device 101 able to implement the methods of the invention.

The vehicle comprises a primary module P_M, and another module S_M. The primary module P_M and the other module S_M may be any electronic module as mentioned above. Also, the primary module P_M and the other module S_M are respectively operated by software elements S_P_M and S_S_M.

These software elements may comprise instructions executable by a processor of the vehicle, for example stored on non-volatile memories of the vehicle. Alternatively, these software elements may include programmable hardware such as FPGAs.

The software elements S_P_M and S_S_M can be updated.

The vehicle further comprises a battery BATT and a temperature sensor T_sensor (for example measuring a temperature outside of the vehicle).

In order to perform an update, for example of the software element S_P_M of the primary module, an update package is received by a communication module COM of the vehicle.

Also, the electronic device 101 comprises a processing module Proc_M configured to:
verify if at least one condition relating to at least one secondary module of the vehicle which is distinct from the primary module of the vehicle is satisfied,
if the at least one condition is not satisfied, prevent downloading over-the-air an update package of the software element and/or preventing updating the software element using the update package and/or preventing executing the updated software element.

The processing module Proc_M can comprise computer instructions stored in a nonvolatile memory to implement the methods described in the present description.

In a first alternative, the secondary module can be the other module S_M. If the other module S_M has a functionality in common with the primary module, then it is considered that there is a redundancy at least for this common functionality. If there is a redundancy, then the risk in updating S_P_M is minimal as long as the update does not also concern S_S_M. This first alternative will be described in greater detail in reference to figure 2.

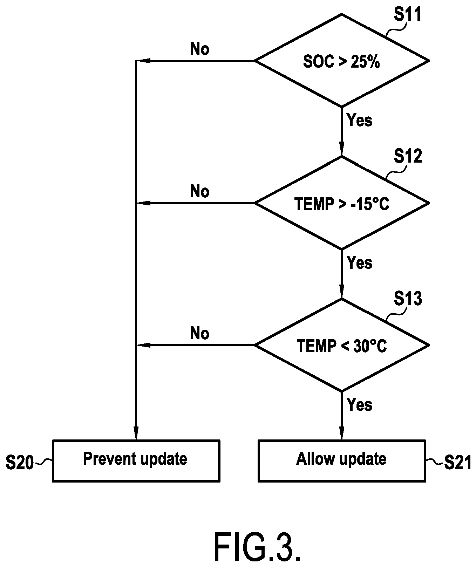

In a second alternative not covered independently by the claims, the secondary module is a temperature acquisition module such as temperature sensor T_sensor. In this alternative, the temperature is compared to a threshold to verify if the update of S_P_M can be allowed. This second alternative will be described in greater detail in reference to figure 3. It should be noted that the state of charge of the battery BATT may also be taken into account in this alternative.

Those first and second alternatives are compatible and may both be implemented by the electronic device 101. For example, the conditions of the first alternative can be verified first and if the update can be done then the conditions of the second alternative can be verified.

Figure 2 shows the steps of a method according to the first alternative mentioned in reference to figure 1. This method can be implemented by an electronic device such as the electronic device 101 of figure 1.

In a first step S01, the update package is downloaded, for example using the communication module COM. This update package can concern a software element such as S_P_M.

Then, in step S02, it is verified if the vehicle comprises a module which has a functionality in common with the primary module P_M operated by the software element S_P_M.

The following table presents examples of modules which have functionalities in common on a same line:

| | |
|---|---|
| Engine | Hybrid vehicle electrical motor |
| Camera | Radar |
| Electrical vehicle main motor | Electrical vehicle sub motor |
| Camera | Lidar |
| Meter | Head-Up display |

All these examples are operated using software elements.

If the module P_M has a corresponding module having a common functionality in a similar table, then step S03 can be carried out in which it is decided whether to update the software element S_P_M or the software element of the corresponding module (if this module is also subject to an update). The person skilled in the art will be able to decide which module to update.

It should be noted that if the corresponding module is not subject to an update, then the software element S_P_M can be updated because there is a redundancy with a presumably working module.

The above method prevents a vehicle from being not operable after the update of a software element of this vehicle, as there is always a backup module operating and which will not be updated.

Figure 3 shows the steps of a method according to the second alternative mentioned in reference to figure 1.

These steps can be performed after the steps of the method described in reference to figure 2. Thus, downloading the update package has already been done.

In a first step S11, it is verified whether the state of charge of the battery BATT is above a threshold set for example at 25%. It has been observed that a low state of charge can prevent the process of an update to be performed without any failure.

If it is the case, step S12 is performed in which it is verified whether the temperature measured by T_sensor is above a threshold set for example at -15°C. It has been observed that low temperatures can prevent the battery BATT from delivering enough current: this may lead to a failure during the update.

If it is the case, step S13 is performed in which it is verified whether the temperature measured by T_sensor is below a threshold set for example at 30°C. It has been observed that high temperatures can lead to a use of the AC which uses the battery BATT: this may lead to a failure during the update.

If step S13 is successful, then the update is allowed in step S21: the update package can be implemented, or the updated software element can be executed (or, if the software package has not been downloaded, the downloading can be allowed).

Step S20 is performed if any one of step S11, S12, or S13 fails.

Additional embodiments can comprise verifying if at least one given location is at a distance which is below a given distance threshold from the vehicle.

For example, if a garage able to repair the vehicle is within a few kilometers from the vehicle, then the update can be allowed.

Also, the update can also be subjected to a confirmation by a user. The driver can approve the update in a human machine interface of the vehicle.

The above embodiments reduce the risks associated with updates, and also increase the chance of having successful update processes that can be carried out from the downloading to the executing of the software element.

Although the present invention has been described above with reference to certain specific embodiments, it will be understood that the invention is not limited by the particularities of the specific embodiments.

## Claims

1. A method for managing the update of a first software element (S_P_M) configured to be used to operate an associated primary module (P_M) of a vehicle, the method being performed by a processing module of the vehicle and comprising:
verifying (S02) if the vehicle comprises a secondary module (S_M) having at least one functionality in common with the primary module, such a common functionality being indicative of a redundancy between the primary module (P_M) and the secondary module (S_M) for said at least one functionality,
when the first software element (S_P_M) and a second software element (S_S_M) configured to be used to operate the associated secondary module (S_M) are both subjected to an update, determining (S03), between the primary module and the secondary module, a first module to be updated, and a second module,
the method further comprising for the first module:
updating the software element using an update package,
the method further comprising for the second module:
preventing updating the software element.

2. The method according to claim 1, wherein the secondary module being a temperature acquisition module (T_sensor), the method further comprises, when the secondary module is not subject to an update of said software element, verifying if an acquired temperature is above and/or below at least one given temperature threshold (S12, S13).

3. The method according to claim 2, further comprising verifying (S11) if a state of charge of a battery (BATT) of the vehicle is above a given charging threshold.

4. The method according to claim 3, further comprising:
verifying (S12) if a temperature acquired by the secondary module is above -15°C,
verifying (S13) if the acquired temperature is below 30°C, and
verifying (S11) if the state of charge of the battery is above 25%.

5. The method according to any one of claims 2 to 4, wherein the method further comprises verifying if at least one given location is at a distance from the vehicle which is below a given distance threshold from the vehicle.

6. The method according to any one of claims 2 to 5, wherein the method further comprises verifying that an update approval has been received through a human machine interface of the vehicle.

7. A device for managing the update of a first software element (S_P_M) configured to be used to operate an associated primary module (P_M) of a vehicle, the device being configured to be arranged in the vehicle and comprising a processing module (Proc_M) configured to:
verify if the vehicle comprises a secondary module (S_M) having at least one functionality in common with the primary module, such a common functionality being indicative of a redundancy between the primary module (P_M) and the secondary module (S_M) for said at least one functionality,
when the first software element (S_P_M) and a second software element (S_S_M) configured to be used to operate the associated secondary module (S_M) are both subjected to an update, determine, between the primary module and the secondary module, a first module to be updated, and a second module,
update the software element of said first module using an update package; and
prevent updating the software element of said second module, .

8. A vehicle comprising the device of claim 7.

9. A computer program including instructions for executing the steps of a method according to any one of claims 1 to 6 when said program is executed by a computer.

10. A recording medium readable by a computer and having recorded thereon a computer program including instructions for executing the steps of a method according to any one of claims 1 to 6.

## Patentansprüche

1. Verfahren zur Verwaltung der Aktualisierung eines ersten Softwareelements (S_P_M), das konfiguriert ist, um zum Betreiben eines assoziierten primären Moduls (P_M) eines Fahrzeugs verwendet zu werden, wobei das Verfahren durch ein Verarbeitungsmodul des Fahrzeugs durchgeführt wird und Folgendes umfasst:
Überprüfen (S02), ob das Fahrzeug ein sekundäres Modul (S_M) umfasst, das mindestens eine mit dem primären Modul gemeinsame Funktionalität aufweist, wobei eine solche gemeinsame Funktionalität indikativ für eine Redundanz zwischen dem primären Modul (P_M) und dem sekundären Modul (S_M) für die genannte mindestens eine Funktionalität ist,
wenn das erste Softwareelement (S_P_M) und ein zweites Softwareelement (S_S_M), das konfiguriert ist, um zum Betreiben des assoziierten sekundären Moduls (S_M) verwendet zu werden, beide einer Aktualisierung unterzogen werden, Bestimmen (S03), zwischen dem primären Modul und dem sekundären Modul, eines ersten zu aktualisierenden Moduls und eines zweiten Moduls,
das Verfahren für das erste Modul ferner Folgendes umfassend:
Aktualisieren des Softwareelements unter Verwendung eines Aktualisierungspakets,
das Verfahren für das zweite Modul ferner Folgendes umfassend:
Verhindern eines Aktualisierens des Softwareelements.

2. Verfahren nach Anspruch 1, wobei das sekundäre Modul ein Temperaturerfassungsmodul (T_sensor) ist, das Verfahren, wenn das sekundäre Modul keiner Aktualisierung des genannten Softwareelements unterzogen wird, ferner ein Überprüfen umfasst, ob eine erfasste Temperatur oberhalb und/oder unterhalb mindestens eines gegebenen Temperaturschwellenwerts (S12, S13) ist.

3. Verfahren nach Anspruch 2, ferner umfassend ein Überprüfen (S11), ob ein Ladezustand einer Batterie (BATT) des Fahrzeugs oberhalb eines gegebenen Ladeschwellenwerts ist.

4. Verfahren nach Anspruch 3, ferner umfassend:
Überprüfen (S12), ob eine durch das sekundäre Modul erfasste Temperatur oberhalb von -15 °C ist,
Überprüfen (S13), ob die erfasste Temperatur unterhalb von 30 °C ist, und
Überprüfen (S11), ob der Ladezustand der Batterie oberhalb von 25 % ist.

5. Verfahren nach einem der Ansprüche 2 bis 4, wobei das Verfahren ferner umfasst, Überprüfen, ob mindestens ein vorgegebener Ort in einer Entfernung von dem Fahrzeug liegt, die unterhalb eines vorgegebenen Abstandsschwellenwerts von dem Fahrzeug liegt.

6. Verfahren nach einem der Ansprüche 2 bis 5, wobei das Verfahren ferner ein Überprüfen umfasst, dass eine Aktualisierungsgenehmigung über eine Mensch-Maschine-Schnittstelle des Fahrzeugs empfangen worden ist.

7. Vorrichtung zur Verwaltung der Aktualisierung eines ersten Softwareelements (S_P_M), das konfiguriert ist, um zum Betreiben eines assoziierten primären Moduls (P_M) eines Fahrzeugs verwendet zu werden, wobei die Vorrichtung konfiguriert ist, um in dem Fahrzeug angeordnet zu sein, und umfassend ein Verarbeitungsmodul (Proc_M), das zu Folgendem konfiguriert ist:
Überprüfen, ob das Fahrzeug ein sekundäres Modul (S_M) umfasst, das mindestens eine mit dem primären Modul gemeinsame Funktionalität aufweist, wobei eine solche gemeinsame Funktionalität indikativ für eine Redundanz zwischen dem primären Modul (P_M) und dem sekundären Modul (S_M) für die mindestens eine Funktionalität ist,
wenn das erste Softwareelement (S_P_M) und ein zweites Softwareelement (S_S_M), das konfiguriert ist, um zum Betreiben eines assoziierten sekundären Moduls (S_M) verwendet zu werden, beide einer Aktualisierung unterzogen werden, Bestimmen, zwischen dem primären Modul und dem sekundären Modul eines ersten zu aktualisierendes Moduls und eines zweiten Moduls,
Aktualisieren des Softwareelements des ersten Moduls unter Verwendung eines Aktualisierungspakets; und
Verhindern eines Aktualisierens des Softwareelements des zweiten Moduls.

8. Fahrzeug, umfassend die Vorrichtung nach Anspruch 7.

9. Computerprogramm, das Anweisungen zum Ausführen der Schritte eines Verfahrens nach einem der Ansprüche 1 bis 6 beinhaltet, wenn das Programm durch einen Computer ausgeführt wird.

10. Durch einen Computer lesbares Aufzeichnungsmedium, auf dem ein Computerprogramm aufgezeichnet ist, das Anweisungen zum Ausführen der Schritte eines Verfahrens nach einem der Ansprüche 1 bis 6 beinhaltet.

## Revendications

1. Procédé de gestion de la mise à jour d'un premier élément de logiciel (S_P_M) configuré pour être utilisé pour faire fonctionner un module principal associé (P_M) d'un véhicule, le procédé étant mis en œuvre par un module de traitement du véhicule et comprenant :
la vérification (S02) si le véhicule comprend un module secondaire (S_M) ayant au moins une fonctionnalité en commun avec le module principal, une telle fonctionnalité commune étant indicative d'une redondance entre le module principal (P_M) et le module secondaire (S_M) pour ladite au moins une fonctionnalité,
quand le premier élément de logiciel (S_P_M) et un deuxième élément de logiciel (S_S_M) configuré pour être utilisé pour faire fonctionner le module secondaire associé (S_M) font tous les deux l'objet une mise à jour, la détermination (S03), entre le module principal et le module secondaire, d'un premier module devant être mis à jour, et d'un deuxième module,
le procédé comprenant en outre pour le premier module :
la mise à jour de l'élément de logiciel en utilisant un paquet de mise à jour,
le procédé comprenant en outre pour le deuxième module :
l'empêchement de la mise à jour de l'élément de logiciel.

2. Procédé selon la revendication 1, selon lequel, le module secondaire étant un module d'acquisition de la température (T_sensor), le procédé comprend en outre, quand le module secondaire n'est pas objet d'une mise à jour dudit élément de logiciel, la vérification si une température acquise est au-dessus et/ou en-dessous d'au moins un seuil de température donné (S12, S13).

3. Procédé selon la revendication 2, comprenant en outre la vérification (S11) si un état de charge d'une batterie (BATT) du véhicule est au-dessus d'un seuil de charge donné.

4. Procédé selon la revendication 3, comprenant en outre :
la vérification (S12) si une température acquise par le module secondaire est au-dessus de -15°C,
la vérification (S13) si la température acquise est en-dessous de 30°C, et
la vérification (S11) si l'état de charge de la batterie est au-dessus de 25%.

5. Procédé selon l'une quelconque des revendications 2 à 4, selon lequel le procédé comprend en outre la vérification si au moins un emplacement donné est à une distance du véhicule qui est en-dessous d'un seuil de distance donné.

6. Procédé selon l'une quelconque des revendications 2 à 5, selon lequel le procédé comprend en outre la vérification qu'une approbation de mise à jour a été reçue par l'intermédiaire d'une interface homme-machine du véhicule.

7. Dispositif de gestion de la mise à jour d'un premier élément de logiciel (S_P_M) configuré pour être utilisé pour faire fonctionner un module principal associé (P_M) d'un véhicule, le dispositif étant configuré pour être disposé dans le véhicule et comprenant un module de traitement (Proc_M) configuré pour :
vérifier si le véhicule comprend un module secondaire (S_M) ayant au moins une fonctionnalité en commun avec le module principal, une telle fonctionnalité commune étant indicative d'une redondance entre le module principal (P_M) et le module secondaire (S_M) pour ladite au moins une fonctionnalité,
quand le premier élément de logiciel (S_P_M) et un deuxième élément de logiciel (S_S_M) configuré pour être utilisé pour faire fonctionner le module secondaire associé (S_M) font tous les deux l'objet d'une mise à jour, déterminer, entre le module principal et le module secondaire, un premier module devant être mis à jour, et un deuxième module,
mettre à jour l'élément de logiciel dudit premier module en utilisant un paquet de mise à jour ; et
empêcher la mise à jour de l'élément de logiciel dudit deuxième module.

8. Véhicule comprenant le dispositif selon la revendication 7.

9. Programme d'ordinateur comprenant des instructions permettant d'exécuter les étapes d'un procédé selon l'une quelconque des revendications 1 à 6 lorsque ledit programme est exécuté par un ordinateur.

10. Support d'enregistrement lisible par un ordinateur, sur lequel est enregistré un programme d'ordinateur comprenant des instructions permettant d'exécuter les étapes d'un procédé selon l'une quelconque des revendications 1 à 6.
